# EUROPÄISCHE PATENTANMELDUNG

(11) **EP 2 249 145 A2**
(43) Veröffentlichungstag der Anmeldung: **10.11.2010**
(21) Anmeldenummer: 10004738.0
(22) Anmeldetag: 05.05.2010
(51) Int. Cl.: G01N 21/64, G01N 21/85

(54) **Vorrichtung zur Messung der Fluoreszenz eines Mediums**

(30) Priorität: 07.05.2009 DE 102009020252
(71) Anmelder: KROHNE Optosens GmbH, 41464 Neuss (DE)
(72) Erfinder: Schreiber, Marco, Dr., 47057 Duisburg (DE); Fritsch, Thomas, Dr., 41068 Mönchengladbach (DE)
(74) Vertreter: Gesthuysen, von Rohr & Eggert

(57) **Zusammenfassung**

Beschrieben und dargestellt ist eine Vorrichtung zur Messung der Fluoreszenz eines Mediums (2) mit wenigstens einer Strahlenquelle (3), wenigstens einem Emissionsempfangselement (4) und wenigstens einem optischen Abbildungselement (5), wobei die Strahlenquelle (3) und das Emissionsempfangselement (4) auf der Sensorseite des optischen Abbildungselements (5) angeordnet sind und wobei die Strahlenquelle (2), das Abbildungselement (5) und das Emissionsempfangselement (4) so zueinander ausgerichtet und ausgestaltet sind, dass das auf der Mediumseite des Abbildungselements (5) vorhandene Medium mit Strahlung (6) der Strahlenquelle (3) beaufschlagbar ist und von dem Emissionsempfangselement (4) die Emissionsintensität der von dem Medium (2) durch Fluoreszenz emittierten Mediumstrahlung (7) erfassbar ist, wobei wenigstens ein Streuempfangselement (8) so auf der Sensorseite des optischen Abbildungselements (5) angeordnet und ausgestaltet ist, dass mit dem Streuempfangselement (8) die Streuintensität der von dem Medium (2) gestreuten Mediumstrahlung (9) im Bereich der durch die interessierende Fluoreszenz bedingten Absorption der Strahlung (6) der Strahlenquelle (3) erfassbar ist.

## Beschreibung

Die Erfindung betrifft eine Vorrichtung zur Messung der Fluoreszenz eines Mediums mit wenigstens einer Strahlenquelle, wenigstens einem Emissionsempfangselement und wenigstens einem optischen Abbildungselement, wobei die Strahlenquelle und das Emissionsempfangselement auf der Sensorseite des optischen Abbildungselements angeordnet sind und wobei die Strahlenquelle, das Abbildungselement und das Emissionsempfangselement so zueinander ausgerichtet und ausgestaltet sind, dass das auf der Mediumseite des Abbildungselements vorgesehene Medium mit Strahlung der Strahlenquelle beaufschlagbar ist und von dem Emissionsempfangselement die Emissionsintensität der von dem Medium durch Fluoreszenz emittierten Mediumstrahlung erfassbar ist, wobei wenigstens ein Streuempfangselement so auf der Sensorseite des optischen Abbildungselements angeordnet und ausgestaltet ist, dass mit dem Streuempfangselement die Streuintensität der von dem Medium gestreuten Mediumstrahlung im Bereich der durch die interessierende Fluoreszenz bedingten Absorption der Strahlung der Strahlenquelle erfassbar ist.

Messvorrichtungen der in Rede stehenden Art sind seit längerem bekannt und werden beispielsweise auf den Gebieten der chemischen Analytik und der Umwelt- und Qualitätsüberwachung eingesetzt. Derartige Vorrichtungen nutzen die Fluoreszenz von Bestandteilen des Mediums - Fluorophoren - aus, also die kurzzeitige Emission von Licht von Fluorophoren aufgrund einer geeigneten spektralen elektromagnetischen Anregung. Von dem Fluorophor wird Strahlungsenergie absorbiert und - teilweise - durch auf Fluoreszenz beruhender Emission von Licht wieder abgegeben, wobei das emittierte Licht ein charakteristisches Spektrum aufweist, also Strahlungsenergie nur bei bestimmten Frequenzen emittiert wird. Die von dem Emissionsempfangselement erfasste Emissionsintensität der von dem Medium durch Fluoreszenz emittierten Mediumstrahlung gestattet also beispielsweise eine Aussage über die Konzentration der interessierenden fluoreszierenden Bestandteile innerhalb des Mediums.

Die Höhe der von dem Emissionsempfangselement erfassten Emissionsintensität, also der von dem Medium durch Fluoreszenz emittierten Mediumstrahlung, hängt - wie bei vielen realen technischen Messvorrichtungen - von der konstruktiven Ausgestaltung der Messvorrichtung ab, beispielsweise von der Anordnung des Emissionsempfangselements, des Mediums und der Strahlenquelle zueinander, so dass darauf zu achten ist, dass der Teil der durch Fluoreszenz emittierten Mediumstrahlung, der von dem Emissionsempfangselement erfasst wird, eine zuverlässige Aussage über die Gesamt-Emissionsintensität gestattet. Naturgemäß ist eine solche Messung mit einer gewissen Unsicherheit behaftet.

Aufgabe der vorliegenden Erfindung ist es, eine Vorrichtung zur Messung der Fluoreszenz eines Mediums anzugeben, bei der die zuvor genannten Nachteile - zumindest teilweise - vermieden werden, die insbesondere eine erhöhte Zuverlässigkeit bei der Messung der Fluoreszenz eines Mediums aufweist.

Die oben aufgezeigte Aufgabe ist erfindungsgemäß zunächst und im Wesentlichen bei der in Rede stehenden Vorrichtung dadurch gelöst, dass eine Kompensation bezüglich der Temperatur des Mediums und/oder der Temperatur wenigstens eines der Empfangselemente erfolgt. Durch diese Kompensation wird erfindungsgemäß eine besonders hohe Genauigkeit und Zuverlässigkeit bei der Messung der Fluoreszenz eines Mediums erreicht. Die Kompensation der Temperatur gelingt dadurch, dass die Temperatur des Mediums bzw. die Temperatur des temperaturmäßig zu kompensierenden Empfangselementes zunächst messtechnisch erfasst wird. Die aktuelle Temperatur wird dann dazu verwendet, dass ein bekannter Zusammenhang zwischen der Mediumtemperatur und der Fluoreszenz des Mediums bzw. der Temperatur des betreffenden Empfangselements und seiner Empfindlichkeit bei der Auswertung des Messsignals berücksichtigt wird. Der "bekannte Zusammenhang" kann selbstverständlich in vorgelagerten Versuchsreihen zunächst ermittelt werden. Erst durch die erfindungsgemäße Maßnahme ist es möglich, tatsächlich zuverlässige qualitative aber auch quantitative Messungen der Fluoreszenz durchzuführen, da ein wesentlicher Einflussfaktor berücksichtigt wird, ein Einflussfaktor der in doppelter Hinsicht relevant ist, nämlich hinsichtlich der Intensität der Fluoreszenz und damit der Erzeugung des Messsignals - gleichbleibende Anregung vorausgesetzt - wie auch hinsichtlich der Detektion der auf Fluoreszenz zurückgehenden Strahlung durch das Empfangselement,

Die vorgenannte Vorrichtung zur Messung der Fluoreszenz eines Mediums macht sich erfindungsgemäß die Erkenntnis zu nutze, dass die von dem Medium durch Fluoreszenz emittierte Strahlungsenergie zuvor von den fluoreszierenden Bestandteilen des Mediums aus der Strahlung der Strahlenquelle entnommen - also absorbiert - worden sein muss, so dass sich die Änderung der Streuintensität der von dem Medium gestreuten Mediumstrahlung in dem Frequenzbereich, in dem die interessierende Fluoreszenz angeregt wird, sich umgekehrt proportional zu der Änderung der Emissionsintensität der von dem Medium durch Fluoreszenz emittierten Mediumstrahlung verhält.

Durch die erfindungsgemäße Erfassung einer zweiten, funktional an die Fluoreszenz gekoppelten Messgröße ist es möglich, eine zuverlässigere Aussage über die interessierende Fluoreszenz zu machen bzw. über die an die Erscheinung der Fluoreszenz funktional gekoppelten Eigenschaften, wie beispielsweise die Konzentration der fluoreszierenden Bestandteile innerhalb des Mediums.

Bei einer vorteilhaften Ausgestaltung der erfindungsgemäßen Messvorrichtung ist vorgesehen, dass ein Strahlteiler zwischen der Strahlenquelle und dem Abbildungselement angeordnet ist, und der Strahlteiler einen bekannten Teil der von der Strahlenquelle emittierten Strahlung - im folgenden als Referenzstrahlung bezeichnet - auf ein Referenzempfangselement lenkt und die Referenzstrahlung von dem Referenzempfangselement erfassbar ist, wodurch auch die Quellintensität der Strahlenquelle von dem Referenzempfangselement grundsätzlich erfassbar ist. Diese Ausgestaltung hat den Vorteil, dass die Vorrichtung bezüglich der Quellintensität der Strahlenquelle geräteintem kalibrierbar ist, so dass durch äußere Einflüsse oder durch Alterung bedingte Änderungen der Quellintensität der Strahlenquelle stets berücksichtigt werden können. Dabei werden der Strahlteiler und das Referenzempfangselement vorzugsweise so ausgerichtet, dass Rückstrahlung des Mediums nicht das Referenzempfangselement beaufschlagen kann, was die Erfassung der Quellintensität der Strahlenquelle verfälschen würde.

Das Referenzempfangselement ist zur Vermeidung der Erfassung von Rückstrahlung aus dem Medium vorzugsweise so orientiert, dass das Referenzempfangselement entweder mehr in Richtung auf die Strahlenquelle orientiert ist als in Richtung auf das Medium oder das Referenzempfangselement nah an der Strahlenquelle angeordnet ist, so dass schon durch die Beabstandung von dem Medium eine Rückstrahlung aus dem Medium vermieden wird.

Der Begriff "Strahlteiler" ist dabei derart zu verstehen, dass nicht zwingend derjenige Anteil der Strahlung der Strahlenquelle, der den Strahlteiler beaufschlagt, in mehrere Strahlen aufgeteilt werden muss, sondern derart, dass ein Teil der Strahlung der Strahlenquelle - die Referenzstrahlung - in Richtung auf das Referenzempfangselement abgelenkt wird. Insgesamt wird so eine Aufteilung der Gesamtstrahlung der Strahlenquelle erreicht, wobei nicht die gesamte Quellsstrahlung den Strahlteiler durchlaufen muss.

Nach einer weiteren vorteilhaften Ausgestaltung der Erfindung weist die erfindungsgemäße Vorrichtung eine Auswerteeinheit zur Berechnung der Fluoreszenz des Mediums auf, wobei der Auswerteeinheit neben der von dem Emissionsempfangselement erfassten Emissionsintensität der von dem Medium durch Fluoreszenz emittierten Mediumstrahlung auch die von dem Streuempfangselement erfasste Streuintensität der von dem Medium gestreuten Mediumstrahlung im Bereich der durch die interessierende Fluoreszenz bedingten Absorption übermittelt wird. Zusätzlich oder alternativ wird der Auswerteeinheit auch die von dem Referenzempfangselement erfasste Quellintensität der Strahlenquelle übermittelt. Dies ist insbesondere vorteilhaft hinsichtlich einer weiteren bevorzugten Ausgestaltung der Erfindung, wonach die Auswerteeinheit die erfasste Emissionsintensität der durch Fluoreszenz emittierten Mediumstrahlung in Kombination mit der sich umgekehrt proportional zur Emissionsintensität verhaltenen Streuintensität der von dem Medium gestreuten Mediumstrahlung im Bereich der durch die interessierenden Fluoreszenz bedingten Absorption in einen Konzentrationswert der fluoreszierenden Bestandteile des Mediums umrechnet. Dadurch kann die Vorrichtung zur Messung der Fluoreszenz auf sehr spezifische Aufgabenstellungen abgestimmt werden, können beispielsweise auch Konzentrationswerte nicht nur der fluoreszierenden molekularen Bestandteile des Mediums angegeben werden, sondern auch Konzentrationen von größeren Einheiten des Mediums, die wiederum die fluoreszierenden Bestandteile beinhalten.

Für ganz spezifische Messungen der Fluoreszenz eines Mediums, also bei ausschließlicher Messung einer bestimmten Charakteristik von Absorptions- und Emissionsbanden, hat es sich als besonders vorteilhaft und praktikabel her ausgestellt, wenn bei der erfindungsgemäßen Vorrichtung zwischen der Strahlenquelle und dem Abbildungselement oder zwischen der Strahlenquelle und dem Strahlteiler ein quellseitiges optisches Filter mit Bandpasseigenschaft angeordnet ist, wobei das quellseitige optische Filter für denjenigen Frequenzbereich der Strahlung der Strahlenquelle maximal durchlässig ist, mit dem die interessierende Fluoreszenz des Mediums erregt werden kann oder soll. Durch diese Maßnahme wird erreicht, dass einerseits ganz selektiv nur bei einer bestimmten Frequenz der Strahlung der Strahlenquelle eine Fluoreszenz des Mediums erregt wird und nicht durch eine breitbandige Anregung mehrere fluoreszierende Bestandteile des Mediums angeregt werden, so dass andererseits auch empfangsseitig in der Mediumstrahlung nur wenige verschiedene Frequenzen überhaupt vorliegen und beobachtbar sind. Durch das quellseitige optische Filter wird zwar der Anwendungsbereich der Vorrichtung zur Messung der Fluoreszenz eines Mediums eingeschränkt, jedoch vereinfacht dies den empfangs- und auswerteseitigen Aufbau der Vorrichtung.

Gemäß einer weiteren vorteilhaften Ausgestaltung der Erfindung ist vorgesehen, dass zwischen dem Abbildungselement und dem Emissionsempfangselement ein optisches Emissionsfilter mit Bandpasseigenschaft angeordnet ist, wobei das optische Emissionsfilter für den Frequenzbereich der Mediumstrahlung maximal durchlässig ist, in dem die interessierende, durch Fluoreszenz erregte Strahlung des Mediums liegt. Bei dem optischen Emissionsfilter handelt es sich üblicherweise um einen Interferenzfilter, mit dem sich geringe Halbwertsbreiten und geringe Transmissionen im Sperrbereich erzielen lassen. Selbst wenn das Medium quellseitig breitbandig angeregt wird, kann durch Verwendung des optischen Emissionsfilters eine sehr einfache Auswertung der Mediumstrahlung im Bereich der interessierenden Fluoreszenzfrequenz erreicht werden.

Dieser Überlegung folgend, zeichnet sich eine weitere vorteilhafte Ausgestaltung der erfindungsgemäßen Vorrichtung dadurch aus, dass zwischen dem Abbildungselement und dem Streuempfangselement ein optisches Streufilter mit Bandpasseigenschaft angeordnet ist, wobei das optische Streufilter in dem Frequenzbereich der Mediumstrahlung maximal durchlässig ist, in dem das Medium sein durch die interessierende Fluoreszenz bedingtes Absorptionsmaximum hat. Es wird der Vorteil erzielt, dass all jene Frequenzbereiche der Mediumstrahlung, die nicht im Bereich des Absorptionsmaximums liegen, ausgeblendet werden können, so dass nur die zur Auswertung des Absorptionsbandes geeignete Strahlung überhaupt das Streuempfangselement erreicht.

Gemäß einer weiteren besonders vorteilhaften Ausgestaltung der Erfindung ist vorgesehen, dass wenigstens eines der Empfangselemente ein Photomultiplier ist. Photomultiplier bieten gegenüber der Verwendung von Kameras oder Photodioden eine deutlich verbesserte Empfindlichkeit, insbesondere im UV-Bereich.

Eine weitere unabhängige Lehre der Erfindung besteht in der Verwendung der zuvor beschriebenen erfindungsgemäßen Vorrichtung zur fluoreszenzspektroskopischen Inline-Bestimmung des Eiweißgehalts eines milchhaltigen Mediums.

Die Vorteilhaftigkeit der aufgezeigten Verwendung zur Inline-Bestimmung des Eiweißgehalts eines milchhaltigen Mediums ist vor allem unter Berücksichtigung der derzeitig etablierten Verfahren ersichtlich, die nicht zur Inline-Bestimmung des Eiweißgehalts geeignet sind, da ihnen meist die Entnahme einer Probe aus dem zu beobachtenden Prozess zugrundeliegt.

Eine Referenzmethode zu Ermittlung des Proteingehalts in der Milchindustrie ist das nass-chemische Kjeldahl-Verfahren, bei dem eine Milchprobe mit Schwefelsäure aufgeschlossen wird und anschließend mit Natriumlauge Ammoniak freigesetzt wird, welches dann nach Zugabe von Borsäure titriert wird; eine Inline-Messung - also eine Messung im Prozess, z. B. im Reaktor oder im Stoffstrom -, ist hier nicht möglich, es muss immer ein Teil des Produkts endgültig abgezweigt werden. Gleiches gilt auch für das Verfahren nach Dumas, das ebenfalls eine nass-chemische Methode darstellt, bei der die entnommene Probe für den weiteren Prozess unbrauchbar wird.

Molkereien verwenden heutzutage zur Eingangs- und Prozesskontrolle des Proteingehalts auch die Infrarottechnik, bei der relativ selektive Amid-Absorptionsbanden im NIR- und MIR-Bereich gemessen werden (NIR = Nahes Infrarot; MIR = Mittleres Infrarot). Die dafür verwendeten Messvorrichtungen müssen jedoch wiederkehrend mit den Ergebnissen einer Referenzanalyse - z. B. nach Kjeldahl - kalibriert werden.

Die Verwendung der zuvor beschriebenen Vorrichtung zur Messung der Fluoreszenz eines Mediums ist im Gegensatz zu den zuvor beschriebenen Verfahren und diesbezüglichen Vorrichtungen für die Inline-Messung des Eiweißgehalts eines milchhaltigen Mediums geeignet, da bei dieser Verwendung keine fortwährende Kalibrierung durch Probennahme notwendig ist.

Erfindungsgemäß ist erkannt worden, dass die Übertragung der NIR-Spektroskopie auf die Bestimmung des Eiweißgehalts eines milchhaltigen Mediums nicht ohne weiteres möglich ist, da es im Wellenbereich des nahen Infrarot zur massiven Überlagerung von Obertönen verschiedener Schwingungszustände der Milch-Inhaltsstoffe kommt und daher keine Bande spezifisch mit dem Gehalt an Protein korreliert. Ferner werden die Banden von dominierenden Wasserabsorptionen überlagert und das Messsignal durch Streuung in Teilchen mit unbekannter Teilchengrößenverteilung gestört.

Erfindungsgemäß ist ferner erkannt worden, dass sich die Fluoreszenzmessung als Methode zur Bestimmung des Proteingehalts über die Messung der Emissionsintensität der von dem Medium durch Fluoreszenz emittierten Mediumstrahlung und durch Messung der Streuintensität der von dem Medium gestreuten Mediumstrahlung im Bereich der durch die interessierende Fluoreszenz bedingten Absorption ganz besonders eignet, da eine vergleichsweise langwellige Verschiebung der Emissionswellenlänge gegenüber der Absorptionswellenlänge erfolgt und es daher besonders einfach ist, die zur Anregung der Fluoreszenz verwendete Strahlung vollständig separiert von der durch den Fluorophor emittierten Strahlung zu detektieren. Die detektierte Strahlung enthält somit im besten Fall ausschließlich Informationen über die fluoreszierenden Bestandteile des milchhaltigen Mediums, dessen Eiweißgehalt bestimmt werden soll.

Ferner ist die Verwendung der erfindungsgemäßen Messvorrichtung zur Bestimmung der Eiweißkonzentration eines milchhaltigen Mediums deshalb vorteilhaft, da Milch insgesamt eine überschaubare Anzahl an fluoreszierenden Bestandteilen enthält, deren Absorptionseigenschaften sich - im Gegensatz zum NIR-Bereich - in dem für die Fluoreszenzmessung geeigneten Wellenlängenbereich nur gering stören.

Ferner ist die Kombination aus Absorptions- und Emissionswellenlänge für den jeweiligen Fluorophor - in der jeweiligen Umgebung - charakteristisch, so dass sich die relative Bandenlage der Absorptions- und der Emissionsbande zur Detektion nutzen lässt. Ferner ist die Methode nicht destruktiv und unabhängig von der optischen Dichte des Mediums.

Der Eiweißgehalt eines milchhaltigen Mediums lässt sich mit der zuvor beschriebenen erfindungsgemäßen Verwendung der Vorrichtung zur Messung der Fluoreszenz dann besonders vorteilhaft durchführen, wenn zur Bestimmung des Eiweißgehalts des milchhaltigen Mediums die Fluoreszenz von Tryptophan herangezogen wird. Hierbei ist erkannt und berücksichtigt worden, dass sich das Absorptionsmaximum des Tryptophans in einem verhältnismäßig kurzwelligen Bereich des elektromagnetischen Lichtspektrums befindet, während andere Inhaltsstoffe langwelligere oder kurzwelligere elektromagnetische Strahlungen absorbieren und es daher nur zu geringen Störungen kommt. Ferner hat Tryptophan einen vergleichsweise hohen molaren Extinktionskoeffizienten, d. h. es absorbiert besonders viel elektromagnetische Strahlung. Insgesamt ist die Empfindlichkeit von Tryptophan, die allgemein gegeben ist aus dem Produkt aus molarem Absorptionskoeffizienten und der Quantenausbeute, deutlich höher als bei anderen fluoreszierenden Alpha-Aminosäuren, was Tryptophan besonders gut geeignet sein lässt zur Inline-Bestimmung des Eiweißgehalts von milchhaltigen Medien.

Eine Messvorrichtung, die speziell auf die letztgenannte Verwendung unter Bestimmung der Fluoreszenz von Tryptophan abzielt, zeichnet sich bevorzugt dadurch aus, dass die Strahlenquelle Licht mit einem Strahlungsmaximum bei im Wesentlichen 289 nm emittiert, und/oder dass das quellseitige optische Filter ein Bandpass mit einem Durchlässigkeitsmaximum bei im Wesentlichen 289 nm ist, und/oder dass das optische Emissionsfilter ein Bandpass mit einem Durchlässigkeitsmaximum bei im Wesentlichen 340 nm ist, insbesondere mit einer Halbwertsbreite von höchstens 10 nm, und/oder dass das optische Streufilter ein Bandpass mit einem Durchlässigkeitsmaximum bei im Wesentlichen 289 nm ist, insbesondere mit einer Halbwertsbreite von höchstens 10 nm; dies berücksichtigt spezielle Emissions- und Absorptionsbande von Tryptophan.

Im Einzelnen gibt es nun eine Vielzahl von Möglichkeiten, die erfindungsgemäße Vorrichtung auszugestalten und weiterzubilden. Dazu wird verwiesen einerseits auf die den Patentansprüchen 1 und 10 nachgeordneten Patentansprüche, andererseits auf die folgende Beschreibung von Ausführungsbeispielen in Verbindung mit der Zeichnung. In der Zeichnung zeigen
- Fig. 1: ein erstes Ausführungsbeispiel einer Vorrichtung zur Messung der Fluoreszenz eines Mediums,
- Fig. 2: ein weiteres, ergänztes Ausführungsbeispiel einer erfindungsge- mäßen Vorrichtung zur Messung der Fluoreszenz eines Medi- ums,
- Fig. 3: ein drittes, ergänztes Ausmhrungsbeispiel der erfindungsgemä- ßen Vorrichtung zur Messung der Fluoreszenz eines Mediums,
- Fig. 4: eine konstruktive Detailansicht eines Halteelements einer Mess- vorrichtung,
- Fig. 5: ein Ausführungsbeispiel einer Messvorrichtung mit fluchtend angeordneten Halteelementen und
- Fig. 6: das Ausfühmngsbeispiel gemäß Fig. 5 mit in einer Haltevorrich- tung gehaltenen Tragelementen.

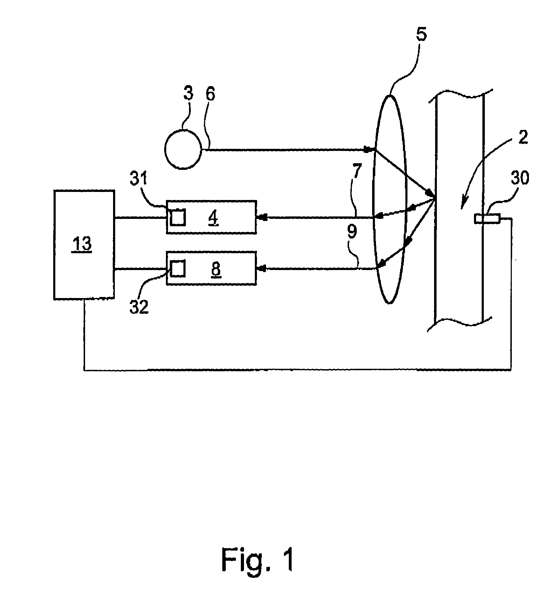

In den Fig. 1 bis 6 sind jeweils dargestellt Vorrichtungen 1 bzw. Ausschnitte aus Vorrichtungen 1 zur Messung der Fluoreszenz eines Mediums 2 mit einer Strahlenquelle 3, einem Emissionsempfangselement 4 und einem optischen Abbildungselement 5, wobei die Strahlenquelle 3 und das Emissionsempfangselement 4 auf der Sensorseite des optischen Abbildungselements 5 angeordnet sind und wobei die Strahlenquelle 3, das Abbildungselement 5 und das Emissionsempfangselement 4 so zueinander ausgerichtet und ausgestaltet sind, dass das auf der Mediumseite des Abbildungselements 5 vorhandene Medium mit Strahlung 6 der Strahlenquelle 3 beaufschlagbar ist und von dem Emissionsempfangselement 4 die Emissionsintensität der von dem Medium 2 durch Fluoreszenz emittierten Mediumstrahlung 7 erfassbar ist.

Die dargestellten Vorrichtungen 1 zur Messung der Fluoreszenz eines Mediums 2 zeichnen sich nun allgemein dadurch aus, dass ein Streuempfangselement 8 so auf der Sensorseite des optischen Abbildungselements 5 angeordnet und ausgestaltet ist, dass mit dem Streuempfangselement 8 die Streuintensität der von dem Medium 2 gestreuten Mediumstrahlung 9 im Bereich der durch die interessierende Fluoreszenz bedingten Absorption der Strahlung 6 der Strahlenquelle 3 erfassbar ist. Diese zusätzliche Erfassung der Streuintensität der von dem Medium 2 gestreuten Mediumstrahlung 9 eignet sich als zusätzliche Größe zur Bestimmung der Fluoreszenz des Mediums 2, wodurch die Feststellung der Fluoreszenz des Mediums 2 mit erhöhter Genauigkeit und erhöhter Sicherheit möglich ist.

Ferner ist ein erster Temperatursensor 30 vorgesehen, der die Temperatur des Mediums 2 erfasst, wobei das Messsignal des Temperatursensors 30 zur Auswerteeinheit 13 übertragen wird und die Messung der Fluoreszenz hinsichtlich der Temperatur des Mediums 2 in der Auswerteeinheit 13 kompensiert wird. Dazu ist in der Auswerteeinheit 13 der Zusammenhang zwischen der Fluoreszenz des Mediums 2 und der Temperatur des Mediums 2 hinterlegt, so dass eine Kompensation des Temperatureinflusses unter Verwendung der aktuellen Temperatur des Mediums möglich ist.

Um auch die Temperaturabhängigkeit der Empfangselemente 4 und 8 kompensieren zu können, werden die Temperaturen dieser Empfangselemente 4, 8 ebenfalls mit Temperatursensoren 31, 32 erfasst und der Auswerteeinheit 13 verfügbar gemacht. In anderen, hier nicht dargestellten Ausführungsbeispielen, erfolgt die Temperaturkompensation der Empfangselemente 4, 8 schon in den Empfangselementen 4, 8 selbst, so dass schon temperaturkompensierte Messsignale an die Auswerteeinheit 13 übertragen werden.

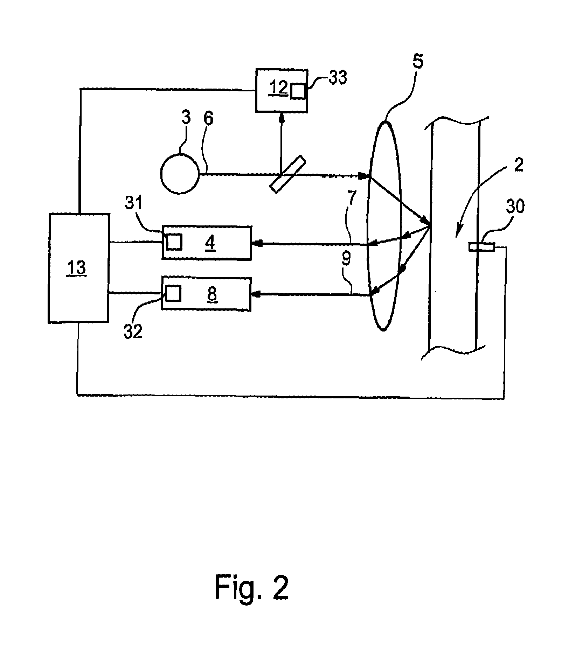

Das Ausführungsbeispiel gemäß Fig. 2 weist einen Strahlteiler 10 zwischen der Strahlenquelle 3 und dem Abbildungselement 5 auf, wobei der Strahlteiler 10 einen bekannten Teil der von der Strahlenquelle 3 emittierten Strahlung 6, der im folgenden als Referenzstrahlung 11 bezeichnet wird, auf ein Referenzempfangselement 12 lenkt, wobei die Referenzstrahlung 11 von dem Referenzempfangselement 12 erfassbar ist. Das bedeutet, dass die Quellintensität der Strahlenquelle 3 von dem Referenzempfangselement 12 ebenfalls erfassbar ist. Dadurch lassen sich unmittelbar in der Vorrichtung 1 selbst alle - wie auch immer verursachten - Änderungen der Quellintensität der Strahlenquelle 3 berücksichtigen, sei es, indem die Quellintensität als separates Signal an eine externe Auswerteeinheit weitergegeben wird, oder sei es, wie in den Fig. 1 bis 3, 5 und 6 dargestellt, indem ein mit der erfasste Quellintensität der Strahlenquelle 3 korrespondierendes Signal an eine interne Auswerteeinheit 13 zur Berechnung der Fluoreszenz des Mediums 2 weitergegeben wird.

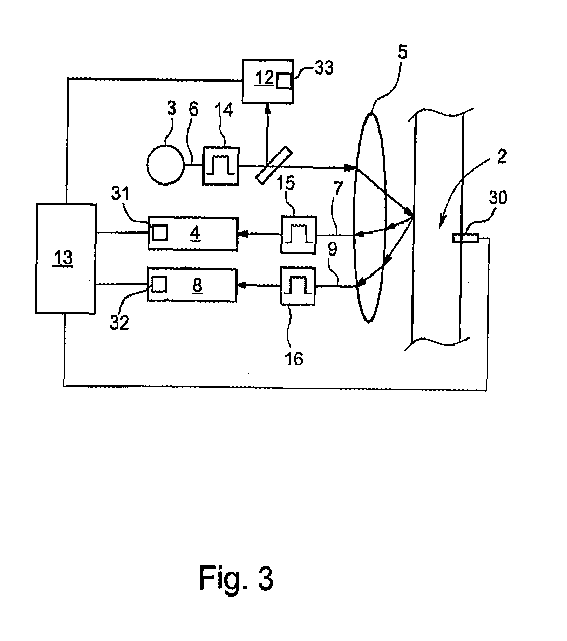

Bei dem Ausführungsbeispiel gemäß Fig. 1 wird der Auswerteeinheit 13 zur Berechnung der Fluoreszenz des Mediums 2 neben der von dem Emissionsempfangselement 4 erfassten Emissionsintensität der von dem Medium 2 durch Fluoreszenz ermittelten Mediumstrahlung 7 auch die von dem Streuempfangselement 8 erfasste Streuintensität der von dem Medium 2 gestreuten Mediumstrahlung 9 im Bereich der durch die interessierende Fluoreszenz bedingten Absorption der Strahlung 6 der Strahlenquelle 3 übermittelt. Bei den Ausfühnngsbeispielen der Messvorrichtung 1 gemäß den Fig. 2 und 3 wird der Auswerteeinheit 13 zusätzlich auch die von dem Referenzempfangselement 12 erfasste Quellintensität der Strahlenquelle 3 übermittelt.

Die Auswerteeinheit 13 erhält noch weitere Informationen, beispielsweise über Prozessparameter, die für die Messung der Fluoreszenz bzw. die Bewertung der gemessenen Fluoreszenz bedeutsam sein können. Dies ist jedoch für das Verständnis der in Rede stehenden Vorrichtung unerheblich, weshalb die Bereitstellung der "weiteren Informationen" vorliegend im Einzelnen nicht dargestellt ist.

Alle in den Figuren dargestellten Ausführungsbeispiele zeichnen sich dadurch aus, dass die Auswerteeinheit 13 die erfasste Emissionsintensität der durch Fluoreszenz emittierten Mediumstrahlung 7 in Kombination mit der sich umgekehrt proportional zur Emissionsintensität verhaltenen Streuintensität der von dem Medium 2 gestreuten Mediumstrahlung 9 im Bereich der durch die interessierende Fluoreszenz bedingten Absorption der Strahlung 6 der Strahlenquelle 3 in einen Konzentrationswert der fluoreszierende Bestandteile des Mediums umrechnet, was in den Ausführungsbeispielen gemäß den Fig. 2 und 3 nach Kalibrierung der Auswerteeinheit 13 mit der von dem Referenzempfangselement 12 erfassten Quellintensität der Strahlenquelle 3 erfolgt. Die Vorrichtung 1 gemäß den Fig. 2, 3, 5 und 6 sind daher zu einer Eigenkalibrierung in der Lage und müssen nicht - beispielsweise durch Auswertung von Proben - regelmäßig kalibriert werden. Dadurch ist die Auswerteeinheit 13 natürlich auch in der Lage, die Konzentrationswerte anderer Bestandteile des Mediums zu ermitteln, in denen die fluoreszierenden Bestandteile in bekannten Anteilen enthalten sind.

Zur Kompensation von Temperatureinflüssen ist auch das Referenzempfangselement 12 vorliegend mit einem Temperatursensor 33 ausgestattet, dessen Messsignal ebenfalls, wie zuvor schon anhand der Temperatursensoren 30 bis 32 erläutert, der Auswerteeinheit 13 übermittelt wird.

Bei dem Ausführungsbeispiel gemäß Fig. 3 ist zu erkennen, dass zwischen der Strahlenquelle 3 und dem Strahlteiler 10 ein quellseitiges optisches Filter 14 mit Bandpasseigenschaft angeordnet ist, wobei das quellseitige optische Filter 14 für denjenigen Frequenzbereich der Strahlung 6 der Strahlenquelle 3 maximal durchlässig ist, mit dem die interessierende Fluoreszenz des Mediums 2 erregt werden kann. Dies hat den Vorteil, dass das Medium 2 nur ganz selektiv angeregt wird, und auch naturgemäß nur ein sehr begrenztes Spektrum auf der Empfangsseite vorliegt, was störungsärmer und einfacher auswertbar ist,

Zur weiteren Vereinfachung der Auswertung ist bei dem Ausführungsbeispiel gemäß Fig. 3 zwischen dem Abbildungselement 5 und dem Emissionsempfangselement 4 ein optisches Emissionsfilter 15 mit Bandpasseigenschaft angeordnet, wobei das optische Emissionsfilter 15 für den Frequenzbereich der Mediumstrahlung 7 maximal durchlässig ist, in dem die interessierende, durch Fluoreszenz erregte Strahlung 7 des Mediums 2 liegt. Dadurch kann selektiv nur ein bestimmtes Band der interessierenden Fluoreszenz zuverlässig ausgewertet werden.

Ferner ist bei der Vorrichtung 1 gemäß dem Ausführungsbeispiel in Fig. 3 zwischen dem Abbildungselement 5 und dem Streuempfangselement 8 ein optisches Streufilter 16 mit Bandpasseigenschaft angeordnet, wobei das optische Streufilter 16 in dem Frequenzbereich der Mediumstrahlung maximal durchlässig ist, in dem das Medium 2 sein durch die interessierende Fluoreszenz bedingtes Absorptionsmaximum hat. Das quellseitige optische Filter 14 und das optische Streufilter 16 sind ähnlich ausgelegt, da das Medium 2 mit elektromagnetischer Strahlung der Frequenz beaufschlagt wird, bei der ein Absorptionsmaximum vorliegt, da der größte Teil der Strahlungsenergie hierdurch auf Fluoreszenz beruhender Emission wieder abgegeben wird.

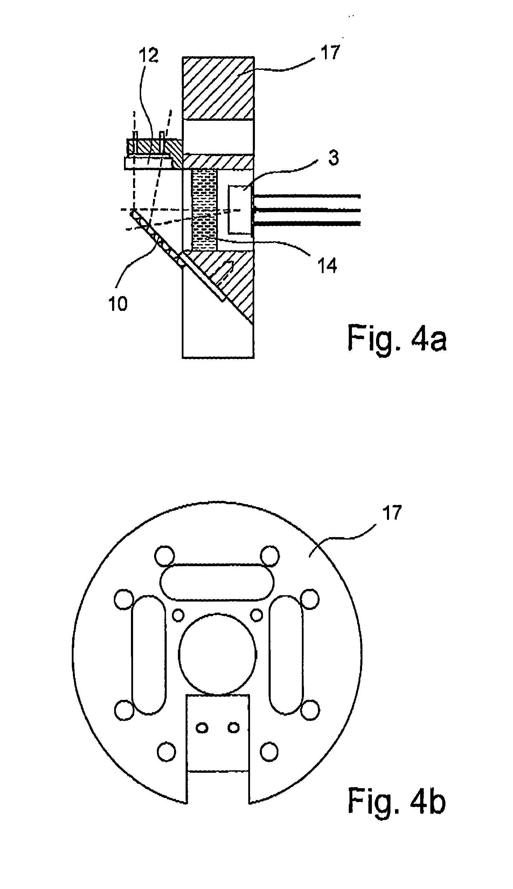

Fig. 4a zeigt ein erstes Tragelement 17 in Seitenansicht, auf dem die Strahlenquelle 3 der Strahlteiler 10 und das Referenzempfangselement 12 gemeinsam angeordnet sind; Fig. 4b zeigt lediglich das erste Tragelement 17. Abstrahlseitig ist ferner auf dem ersten Tragelement 17 zusätzlich auch das quellseitige optische Filter 14 angeordnet. Der Strahlteiler 10 ragt in den Strahlengang der Strahlenquelle 3 teilweise hinein und lenkt einen bekannten Teil der von der Strahlenquelle 3 emittierten Strahlung, die Referenzstrahlung 11, auf das Referenzempfangselement 12. Der Strahlteiler 10 und das Referenzempfangselement 12 sind so ausgerichtet, dass von dem Referenzempfangselement 12 keine Rückstrahlung des Mediums 2 erfasst werden kann. Vorliegend ist der Strahlteiler 10 in einer Ausnehmung des Tragelements 17 befestigt, wobei der Strahlteiler im Wesentlichen in einem 45°-Winkel zu der Hauptabstrahlrichtung der Strahlenquelle 3 angeordnet ist, so dass die Hauptempfangsrichtung des Referenzempfangselements 12 und die Hauptabstrahlrichtung der Strahlenquelle 3 im Wesentlichen 90° aufeinander stehen. Das Tragelement 17 ist vorliegend einstückig ausgebildet und bietet den Vorteil der modularen Zusammenfassung all jener quellseitigen strahlbildenden Elemente, auf deren gegenseitige Anordnung zueinander es ankommt. Die Strahlenquelle 3 wird hier durch eine LED (Light Emitting Diode) gebildet, die engbandig abstrahlt, Bei anderen, hier nicht dargestellten Ausfühnmgsbeispielen gehört zu der Strahlenquelle 3 auch ein Lichtwellenleiter bzw. ein Bündel von Lichtwellenleitern, wobei dann lediglich das abstrahlende Ende der Strahlenquelle auf dem ersten Tragelement angeordnet und fixiert ist.

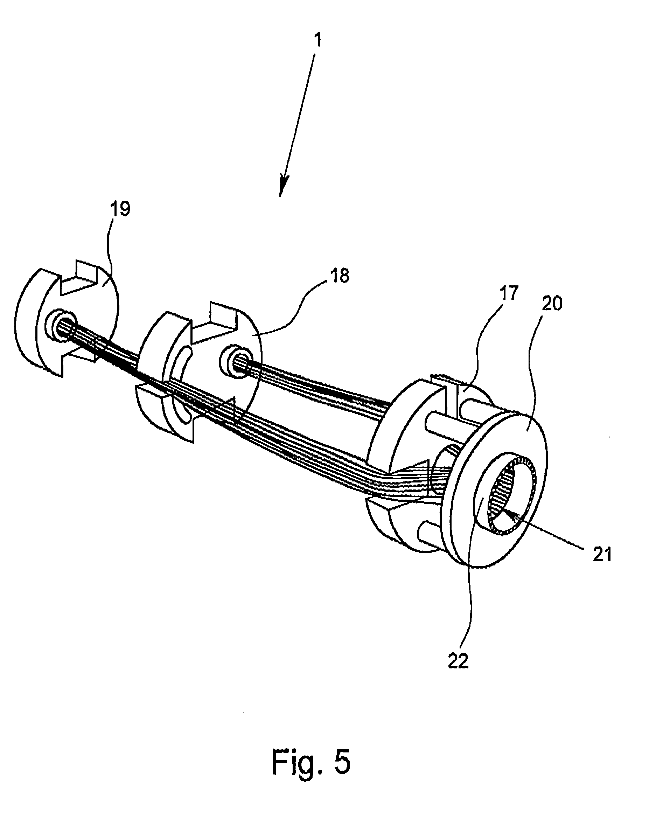

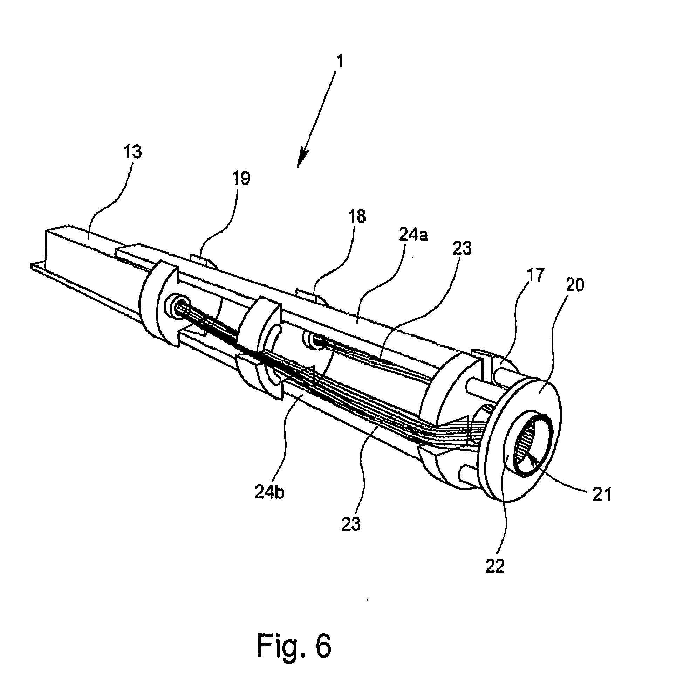

Die Fig. 5 und 6 zeigen neben dem ersten Tragelement 17 auch ein zweites Tragelement 18, auf dem das Emissionsempfangselement 4 angeordnet ist, wobei auf dem zweiten Tragelement 18 zusätzlich auch das optische Emissionsfilter 15 angeordnet ist. Ferner weist die Vorrichtung 1 auch ein drittes Tragelement 19 auf, auf dem das Streuempfangselement 8 angeordnet ist, wobei auf dem dritten Tragelement 19 zusätzlich auch das optische Streufilter 16 angeordnet ist. Ferner ist ein viertes Tragelement 20 vorgesehen, in dem eine Ausnehmung 21 zum ungehinderten Durchlass der Strahlung der Strahlenquelle 3 vorgesehen ist, wobei um die Ausnehmung 21 ein Kranz 22 von Halteelementen mit darin gehaltenen Lichtwellenleitern 23 angeordnet ist, und die Lichtwellenleiter 23 die Mediumstrahlung empfangen und weiterleiten. Durch die Weiterleitung der Mediumstrahlung über Lichtwellenleiter 23 können das Emissionsempfangselement 4 und das Streuempfangselement 8 praktisch beliebig angeordnet werden.

Bei der Vorrichtung 1 gemäß Fig. 6 sind jedoch die vier Tragelemente 17, 18, 19 und 20 in einer Haltevorrichtung 24a, 24b gehalten und zueinander positioniert, wobei es vor allem vorteilhaft ist, dass das erste Tragelement 17 und das vierte Tragelement 20 in der Haltevorrichtung 24a, 24b miteinander fixiert sind, da die gegenseitige Ausrichtung dieser Tragelemente 17, 20 für eine geeignete und stabile Ausrichtung der Strahlengänge notwendig ist. Bei dem Ausführungsbeispiel gemäß Fig. 6 sind alle vier Tragelemente 17 bis 20 miteinander fluchtend in der Haltevorrichtung 24a, 24b ausgerichtet, so dass insgesamt eine sehr kompakte Bauform der Vorrichtung 1 erreicht wird. Endseitig ist noch die Auswerteeinheit 13 erkennbar.

## Patentansprüche

1. Vorrichtung (1) zur Messung der Fluoreszenz eines Mediums (2) mit wenigstens einer Strahlenquelle (3), wenigstens einem Emissionsempfangselement (4) und wenigstens einem optischen Abbildungselement (5), wobei die Strahlenquelle (3) und das Emissionsempfangselement (4) auf der Sensorseite des optischen Abbildungselements (5) angeordnet sind und wobei die Strahlenquelle (3), das Abbildungselement (5) und das Emissionsempfangselement (4) so zueinander ausgerichtet und ausgestaltet sind, dass das auf der Mediumseite des Abbildungselements (5) vorhandene Medium mit Strahlung (6) der Strahlenquelle (3) beaufschlagbar ist und von dem Emissionsempfangselement (4) die Emissionsintensität der von dem Medium (2) durch Fluoreszenz emittierten Mediumstrahlung (7) erfassbar ist, wobei wenigstens ein Streuempfangselement (8) so auf der Sensorseite des optischen Abbildungselements (5) angeordnet und ausgestaltet ist, dass mit dem Streuempfangselement (8) die Streuintensität der von dem Medium (2) gestreuten Mediumstrahlung (9) im Bereich der durch die interessierende Fluoreszenz bedingten Absorption der Strahlung (6) der Strahlenquelle (3) erfassbar ist,
**dadurch gekennzeichnet,**
**dass** eine Kompensation bezüglich der Temperatur des Mediums (2) und/oder der Temperatur wenigstens eines der Empfangselemente (4, 8) erfolgt.

2. Vorrichtung nach Anspruch 1, **dadurch gekennzeichnet, dass** ein Strahlteiler (10) zwischen der Strahlenquelle (3) und dem Abbildungselement (5) angeordnet ist und der Strahlteiler (10) einen bekannten Teil der von der Strahlenquelle (3) emittierten Strahlung - Referenzstrahlung (11) - auf ein Referenzempfangselement (12) lenkt und die Referenzstrahlung (11) von dem Referenzempfangselement (12) erfassbar ist, so dass die Quellintensität der Strahlenquelle (3) von dem Referenzempfangselement (12) erfassbar ist, wobei der Strahlteiler (10) und das Referenzempfangselement (12) insbesondere so ausgerichtet sind, dass von dem Referenzempfangselement (12) keine Rückstrahlung des Mediums (2) erfasst werden kann.

3. Vorrichtung nach Anspruch 1 oder 2, **dadurch gekennzeichnet, dass** eine Auswerteeinheit (13) zur Berechnung der Fluoreszenz des Mediums (2) vorgesehen ist, und der Auswerteeinheit (13) neben der von dem Emissionsempfangselement (4) erfassten Emissionsintensität der von dem Medium (2) durch Fluoreszenz emittierten Mediumstrahlung (7) auch die von dem Streuempfangselement (8) erfasste Streuintensität der von dem Medium (2) gestreuten Mediumstrahlung (9) im Bereich der durch die interessierende Fluoreszenz bedingten Absorption der Strahlung der Strahlenquelle (3) übermittelt wird und/oder der Auswerteeinheit (13) auch die von dem Referenzempfangselement (12) erfasste Quellintensität der Strahlenquelle (3) übermittelt wird.

4. Vorrichtung nach Anspruch 3, **dadurch gekennzeichnet, dass** die Auswerteeinheit (13) die erfasste Emissionsintensität der durch Fluoreszenz emittierten Mediumstrahlung (7) in Kombination mit der sich umgekehrt proportional zur Emissionsintensität verhaltenden Streuintensität der von dem Medium (2) gestreuten Mediumstrahlung (9) im Bereich der durch die interessierende Fluoreszenz bedingten Absorption der Strahlung (6) der Strahlenquelle (2) in einen Konzentrationswert der fluoreszierenden Bestandteile des Mediums (2) umrechnet, insbesondere nach Kalibrierung mit der von dem Referenzempfangselement (12) erfassten Quellintensität der Strahlenquelle (3).

5. Vorrichtung nach einem der Ansprüche 1 bis 4, **dadurch gekennzeichnet, dass** zwischen der Strahlenquelle (3) und dem Abbildungselement (5) oder zwischen der Strahlenquelle (3) und dem Strahlteiler (10) ein quellseitiges optisches Filter (14) mit Bandpasseigenschaft angeordnet ist, wobei das quellseitige optische Filter (14) für denjenigen Frequenzbereich der Strahlung (6) der Strahlenquelle (3) maximal durchlässig ist, mit dem die interessierende Fluoreszenz des Mediums (2) erregt werden kann.

6. Vorrichtung nach einem der Ansprüche 1 bis 5, **dadurch gekennzeichnet, dass** zwischen dem Abbildungselement (5) und dem Emissionsempfangselement (4) ein optisches Emissionsfilter (15) mit Bandpasseigenschaft angeordnet ist, wobei das optische Emissionsfilter (15) für den Frequenzbereich der Mediumstrahlung (7) maximal durchlässig ist, in dem die interessierende, durch Fluoreszenz erregte Strahlung des Mediums (3) liegt.

7. Vorrichtung nach einem der Ansprüche 1 bis 6, **dadurch gekennzeichnet, dass** zwischen dem Abbildungselement (5) und dem Streuempfangselement (8) ein optisches Streufilter (16) mit Bandpasseigenschaft angeordnet ist, wobei das optische Streufilter (16) in dem Frequenzbereich der Mediumstrahlung (9) maximal durchlässig ist, in dem das Medium (3) sein durch die interessierende Fluoreszenz bedingtes Absorptionsmaximum hat.

8. Vorrichtung nach einem der Ansprüche 1 bis 7, **dadurch gekennzeichnet, dass** die Strahlenquelle (3) Licht mit einem Strahlungsmaximum bei im Wesentlichen 289 nm emittiert, und/oder dass das quellseitige optische Filter (14) ein Bandpass mit einem Durchlässigkeitsmaximum bei im Wesentlichen 289 nm ist, und/oder dass das optische Emissionsfilter (15) ein Bandpass mit einem Durchlässigkeitsmaximum bei im Wesentlichen 340 nm ist, insbesondere mit einer Halbwertsbreite von höchstens 10 nm, und/oder dass das optische Streufilter (16) ein Bandpass mit einem Durchlässigkeitsmaximum bei im Wesentlichen 289 nm ist, insbesondere mit einer Halbwertsbreite von höchstens 10 nm.

9. Vorrichtung nach einem der Ansprüche 1 bis 8, **dadurch gekennzeichnet, dass** wenigstens eines der Empfangselemente (4, 8, 12) ein Photomultiplier ist.

10. Verwendung einer Vorrichtung (1) zur Messung der Fluoreszenz eines Mediums (2) mit wenigstens einer Strahlenquelle (3), wenigstens einem Emissionsempfangselement (4) und wenigstens einem optischen Abbildungselement (5), wobei die Strahlenquelle (3) und das Emissionsempfangselement (4) auf der Sensorseite des optischen Abbildungselements (5) angeordnet sind und wobei die Strahlenquelle (2), das Abbildungselement (5) und das Emissionsempfangselement (4) so zueinander ausgerichtet und ausgestaltet sind, dass das auf der Mediumseite des Abbildungselements (5) vorhandene Medium mit Strahlung (6) der Strahlenquelle (3) beaufschlagbar ist und von dem Emissionsempfangselement (4) die Emissionsintensität der von dem Medium (2) durch Fluoreszenz emittierten Mediumstrahlung (7) erfassbar ist, wobei wenigstens ein Streuempfangselement (8) so auf der Sensorseite des optischen Abbildungselements (5) angeordnet und ausgestaltet ist, dass mit dem Streuempfangselement (8) die Streuintensität der von dem Medium (2) gestreuten Mediumstrahlung (9) im Bereich der durch die interessierende Fluoreszenz bedingten Absorption der Strahlung (6) der Strahlenquelle (3) erfassbar ist, zur fluoreszenzspekbroskopischen Inline-Bestimmung des Eiweißgehalts eines milchhaltigen Mediums.

11. Verwendung nach Anspruch 10, **gekennzeichnet durch** den Einsatz einer Vorrichtung mit den Merkmalen wenigstens eines Kennzeichnungsteils eines der Patentansprüche 1 bis 9.

12. Verwendung nach Anspruch 10 oder 11, **dadurch gekennzeichnet, dass** die Fluoreszenz von Tryptophan zur Bestimmung des Eiweißgehalts eines milchhaltigen Mediums herangezogen wird.
